# EUROPEAN PATENT SPECIFICATION

(11) **EP 3 015 434 B1**
(45) Date of publication and mention of the grant of the patent: **03.06.2020**
(21) Application number: 14191246.9
(22) Date of filing: 31.10.2014
(51) Int. Cl.: C02F 1/36

(54) **Cavitation generation mechanism and their use in fermentation and wastewater and sands cleaning processes**
Methode zur Kavitationserzeugung und ihre Anwendung in Fermentations- und Abwasser und Sandreingungsprozessen
Cavitation Méchanism et leur application dans des procédés de fermentation et de nettoyage des eaux d'égout et de sable

(43) Date of publication of application: 04.05.2016
(73) Proprietor: ABS Apparate, Behälter- und Sonderanlagenbau GmbH, 78073 Bad Dürrheim (DE)
(72) Inventor: Ackermann, Heiko, 78604 Rietheim - Weilheim (DE); Hepting, Emil, 78073 Bad Dürrheim (DE)
(74) Representative: Westphal, Mussgnug & Partner Patentanwälte mbB

(56) References cited:
- US-A1- 2010 291 639

## Description

### BACKGROUND OF THE INVENTION - FIELD OF INVENTION

The field of the invention is the field of chemical and mechanical reaction technology.

### BACKGROUND OF THE INVENTION - PRIOR ART

Chemical reactions are overall used for converting substances. A relatively young field in the science of chemistry is the field of the sonochemistry. In sonochemistry acoustic waves are used for generating small bubbles inside a liquid which are collapsing rapidly a short time after they are created. Through the intensive collapse of these bubbles enormous pressures and temperatures are generated which are increasing chemical reaction rates. But the energy efficiency of this process is very low. Most of the acoustic energy dissipates unused inside the liquid. The patents or rather patent applications US 8147619 B2 and DE102009048348A1 and US7998449 and DE102010006753A1 are unique sources for that physical effect.

In these papers the cavitation is generated through vertical oscillations of a liquid inside a vacuum container. If cavitation is produced with this method large cavities are generated therefore intensive collapses occur. But as this process generates cavitation very efficient it is still not used commonly in industrial practice.

The cavitation generating mechanism is clearly described in the above mentioned applications. In a few sentence described: A liquid is inside a vacuum container and not completely filled, a vacuum pump is applied to generate a vacuum inside the vacuum container then external vibrators are used to oscillate the container vertically with more than 2 g. The effect is the following a the liquid is accelerated downwards the gravitation force is not strong enough to follow the container bottom or some part of the liquid so large cavities inside the liquid occur which will shortly collapse after the liquid is accelerated upwards again. But this technical alignment has some disadvantages which will be mentioned later.

Wastewater cleaning consists in the most industrial countries of three stages which are mechanical cleaning, biological cleaning and chemical cleaning.

The mechanical cleaning uses a few conventional methods. These are up concentration, removing large objects with sieves or sedimentation in tanks and skimming.

Biological cleaning is used to degrade biological content of the sewage. And therefore aerobic biological processes are mainly used. The bacteria and microorganisms convert the waste into non harmful substances.

Chemical cleaning is mostly the last step in the wastewater treatment process. For example Strongly acidic or alkaline wastewater are toxic for most of the organism so the wastewater have to be neutralized before it is sent to the rivers.

This was only a very short explanation of wastewater treatment there are much much more processes used (for example Activated Slurry process). For further information have a look at the literature or books available.

Ultrasonic application for wastewater treatment is as sonochemistry a new field but with create scientific interest.

In "Application of Ultrasonic Technology for Water and Wastewater Treatment" from AH Mahvi ultrasonic processes are mentioned and their use for wastewater treatment.

In "Industrial wastewater treatment using hydrodynamic cavitation and heterogeneous advanced Fenton processing" by Anand Chakinala a chemical process is used which generates cavitation hydrodynamically and not with soundwaves.

In "Cavitation Wastewater Treatment: Proof of Concept" from Sergei Go additional purposes are mentioned.

The german company weber-entec GmbH (easily found with google) offers ultrasonic devices for slurry and wastewater treatment.

Also ultrasonic equipment is available for fermentation increase in biogas plants the company sonotronic offers such devices which can be also used in wastewater treatment facilities to increase the output of activated slurry or fermentation biogas production.

In the above mentioned process of mechanical wastewater cleaning large amounts of dirty sands are produced which have to be sometimes further processed. Also as accidents with chemicals occur and it happens that oil or chemicals contaminate the sand. Another process were sands cleaning is used is in the oil sands mines in Canada. In all the mentioned applications the process is similar; the sand is mixed with hot water or an solvent to remove the chemicals, sands etc.

In all the above mentioned prior art processes and applications are some disadvantages which are very similar.
(a) The cavitation generated with the process described in US 8147619 B2 has the problem that the cavitation is at the bottom of the table very intensive and in the middle of the liquid not so strong.
(b) The cleaning mechanism described in US 8147619 B2 is not so effective as it could be because of the fact that the cavitation is not directly generated at the object which has to be cleaned.
(c) If someone wants to upscale the process described in US 8147619 B2 he has the problem that it is very complicated to get powerful enough electric vibrators for such a device.
(d) In the nanoparticle generation process described in US 7998449 the cavitation is powerful enough to produce the carbon nanoparticles or other nanoparticles but a lot of time is needed which limits the potential or output.
(e) Ultrasonic equipment for wastewater treatment is very expensive.
(f) Ultrasonic waves cannot penetrate the wastewater very deep they have the problem that they are absorbed in first few centimeters. So the construction of large wastewater treatment plants with such a technology is very expensive.
(g) Because of the limitations mentioned in (f) the output cannot be very large. So a lot of devices are needed to get the result.
(h) As described in "The Energy Efficiency of Formation of Photons, Radicals, and Ions During Single Bubble Cavitation" from Suslick et al. the energy efficiency of acoustic cavitation is quite low.
(i) Large stirring machines used in wastewater treatment plants have the problem that it is for them impossible to generate a very good microfluidity. Microfluidity means if you have a very large stirrer the flow in a stirring vessel follows the stirrer but if the stirrer is big the turbulences generated with the stirrer are also big for a perfect mixing a lot of turbulence and very small turbulence is needed.
(j) Insufficient mixing causes limitations in the efficiency of all chemical and biological cleaning steps.
(k) In oil sands cleaning large amounts of water and solvents and energy are used which generate a lot of wastewater and costs.

### BACKGROUND OF THE INVENTION -- OBJECTS AND ADVANTAGES

Because of the fact that all mentioned problems have similar occurrences. Most of them can be solved with use of a new mixing or chemical reaction technology which is able to increase chemical reactivity. But therefore the in US 8147619 B2 described process and machines have to be improved that they are capable for processing larger volumes
(a) The invention solves the problem of the irregular cavitation generation at the bottom of the vibration table
(b) The cavitation generation is now directly at the object which has to be cleaned.
(c) Upscaling the process described in US 8147619 B2 can now be easily done.
(d) Nanoparticle generation is greatly increased because of the fact, that the cavitation is much stronger.
(e) No ultrasonic equipment is needed only cheap standard mechanical equipment.
(f) Because of the fact that no ultrasonic waves are used the cavitation generation mechanism penetrates completely the liquid.
(i-j) Because of the (f) the mixing is very effective even in the micrometer scale.
(k) It is well known that cavitation can emulsify oil and water and also well known that cavitation can be used for cleaning applications so the if the cavitation generation mechanism is applied to oil sands it is obvious that the sand can be cleaned or the oil can be extracted.

### SUMMARY

The invention is the subject of independent claim 1. It is an apparatus to perform the following technical process known from the prior art. Inside a liquid, which is inside a vacuum container, particles are excited to vertical vibrations. Through these vertical excitations small cavities are generated at the object which are immediately collapsing. Through that collapse enormous pressures and temperatures are generated, which increases chemical reactivity. 7 different technical machines and 4 different chemical processes are now detailed described.

### BRIEF DESCRPITION OF THE DRAWINGS

Figs 1A to 1D show the physical effect.
Figure 2 show s an apparatus with magnetic cavitation generation.
Figure 3 shows a cleaning machine with all relevant parts inside the vacuum container.
Figure 4 shows a cleaning machine with a vibration isolation sieve inside the liquid.
Figure 5 shows a cavitation generation machine with cavitation generation plates inside the liquid.
Figure 6A to 6E show a three component-mixing machine for containers with standardized dimensions.
Figure 7A to 7D show a vibration table based cavitation generation machine with more than one plate inside liquid.
Figure 8A to 8C show a vibration generation pipe with increased cavitation generation.
Figure 9A shows a flow diagram of a biodiesel process.
Figure 9B shows a flow diagram of a polyester (PET) generation process.
Figure 10A to 10B show a part of the wastewater treatment process in a normal standard wastewater treatment plant.
Figure 11A to 11F show the physical and chemical effects of wastewater treatment.
Figure 12 shows an oil sands extraction or sands cleaning process.

### DRAWINGS - REFERENCE NUMERALS

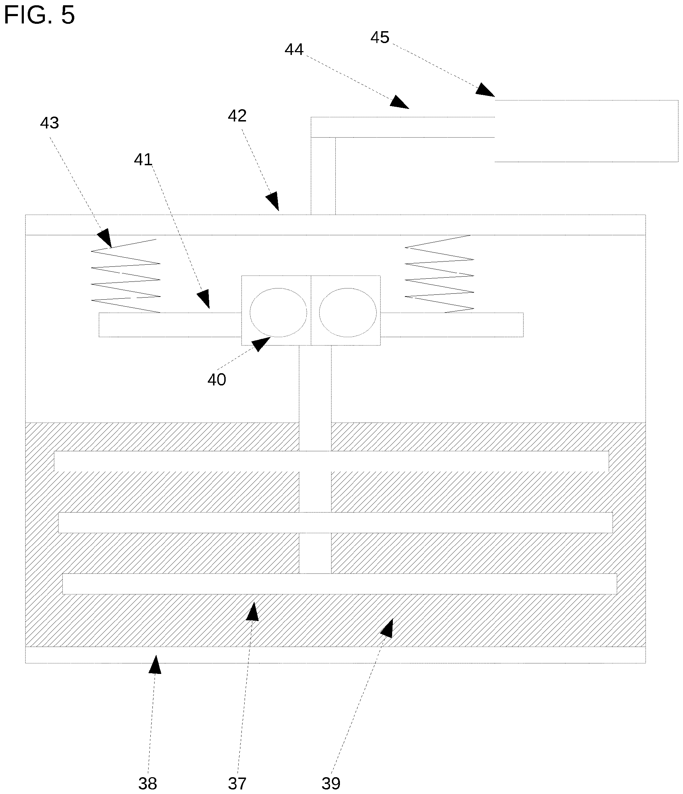

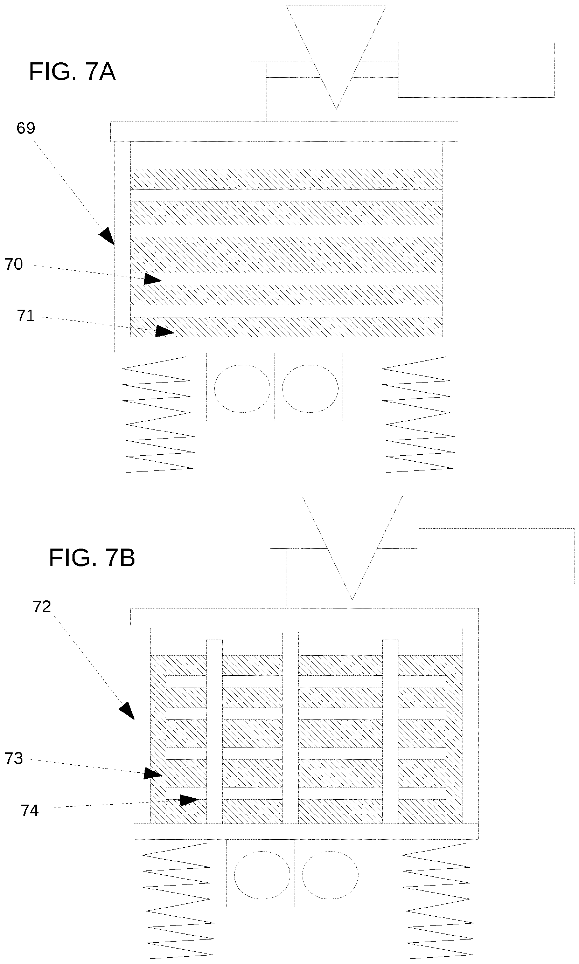

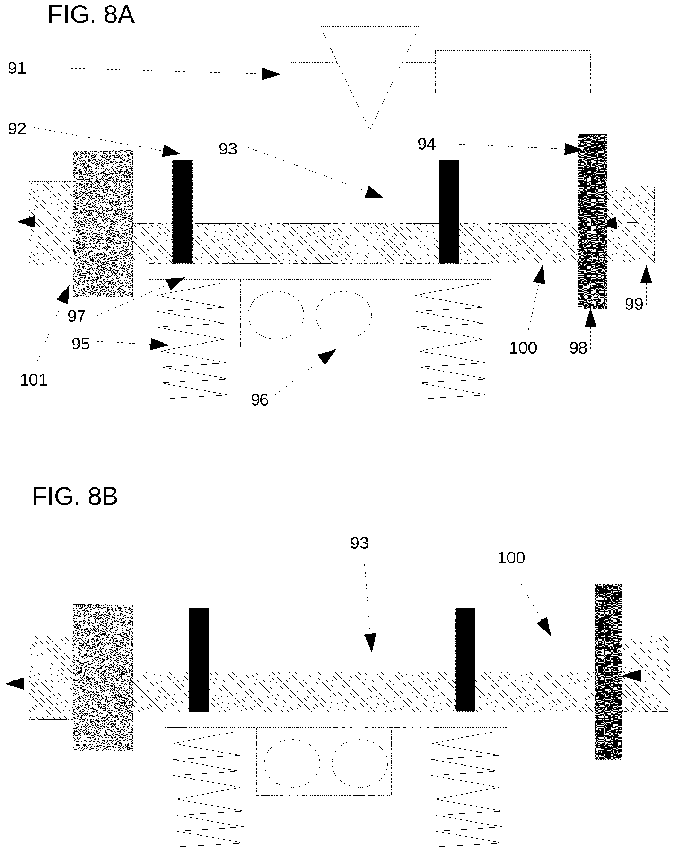

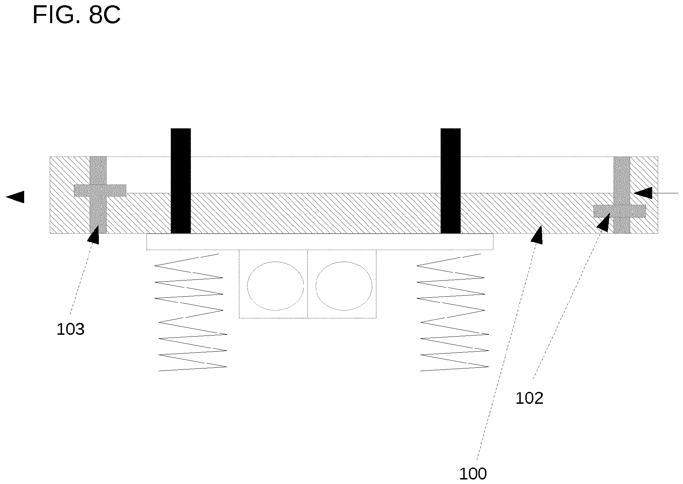

1 Vacuum
2 Liquid
3 Upwards Direction
4 Vacuum gap
5 Cavitation bubble
6 Collapsing bubble and shock waves
7 Downwards direction
8 Electric magnet
9 Ac Voltage and Current Power Supply
10 Vacuum container
11 Liquid
12 Object
13 Particles
14 Cavitation bubble
15 Vacuum
16 Vacuum pump
17 Objects
18 Sieve
19 Rubber buffer
20 External electric vibrator
21 Vacuum pump
22 Vacuum connection
23 Cover
24 Mounting plate
25 Vacuum
26 Vacuum container
27 Vacuum pump with vacuum connection
28 Cover
29 Spring
30 Objects
31 Sieve
32 Vacuum
33 External electric vibrators
34 Damper
35 Vacuum container
36 Liquid
37 plates with holes
38 Vacuum container
39 liquid
40 Electric vibrators
41 Mounting plate
42 Cover
43 Spring
44 Vacuum connection
45 Vacuum pump
46 Vacuum pump
47 Separator
48 Vibration table
49 Rack
50 Adapter for containers with standardized connections
51 Cover connected with hinge
52 Container with standardized connections
53 mounting plate with hole
54 Lock for the cover
55 Height adjustable hinge
56 Vacuum connection
57 Rubber bumper with side restraints
58 Vacuum container with cover
59 Vibration protection adapter for standard containers
60 Vacuum system with separator and vacuum connection
61 Vibration table
62 Vibration protection adapter for standard containers
63 Ibc container
64 Vibration table with vacuum container and vacuum system
65 Ibc adapter
66 Vibration table with vacuum container and vacuum system
67 Barrel with standardized dimensions
68 Adapter for barrel with standardized dimensions
69 Vibration table with vacuum container and vacuum system
70 plates with holes
71 Liquid
72 Vibration table with vacuum container and vacuum system
73 Liquid
74 Connected plates with holes
75 Liquid
76 Cavitation bubble
77 Plates with holes
78 Vacuum
79 Plate
80 Liquid
81 Metering valve
82 Tube
83 Liquid
84 Tube filled with a liquid
85 Electric vibrators
86 Spring
87 Tube
88 Pump
89 Vacuum container
90 Tube with liquid
91 Vacuum system with separator and pump
92 Pipe mounting
93 Vacuum
94 Metering valve
95 Spring
96 Electric vibrator
97 Vibration plate
98 Control for metering valve
99 Liquid
100 Vacuum pipe
101 Fluid pump
102 Valve input
103 Valve output
104 Methanol with catalyst
105 Vegetable oil
106 Metering pump
107 Metering pump
108 Device of figure 8a
109 Centrifugal separator
110 Glycerin
111 Biodiesel
112 Ethylene glycol with catalyst
113 Terephthalic acid
114 Metering pump
115 Metering pump
116 Device of fig 8 a
117 Esterification reactor (a device of figure 5)
118 Unused chemicals
119 Separation vessel
120 Feed for separation vessel
121 Waste and water
122 Recovered feed
123 Feed for polycondenzation reactor
124 Device of figure 5
125 Liquid
126 Pet plastic
127 Wastewater
128 Stirrer
129 Aeration tank
130 Device of figure 7a
131 Pipe
132 Longer pipe
133 Bubbles of air
134 Sludge
135 Device of figure 7a
136 Sludge
137 Sludge digestion
138 Device of figure 7a
139 Stirrer
140 Methane gas
141 Methane gas
142 Fermentation vessel
143 Sludge
144 Sludge in fermentation vessel
145 Microorganism
146 Cavitation bubble
147 Organic waste
148 Destroyed organic wastes
149 Collapsing bubble with shock waves
150 Mined oil sands
151 Device of figure 8a
152 Crusher
153 Unused rest
154 Slurry
155 Cavitated slurry
156 Oil
157 Water
158 Sand and dirt
159 Reaction tank
160 Enlarged view of the vacuum adapter and standard container
161 Standard container
162 Vacuum adapter
163 flow barrier
164 air flow
165 methanol
166 Ethylene glycol
167 Vacuum connection
168 Enlarged view of 57
169 side restraints
170 Vacuum connection

### DETAILED DESCRIPTION OF THE DRAWINGS

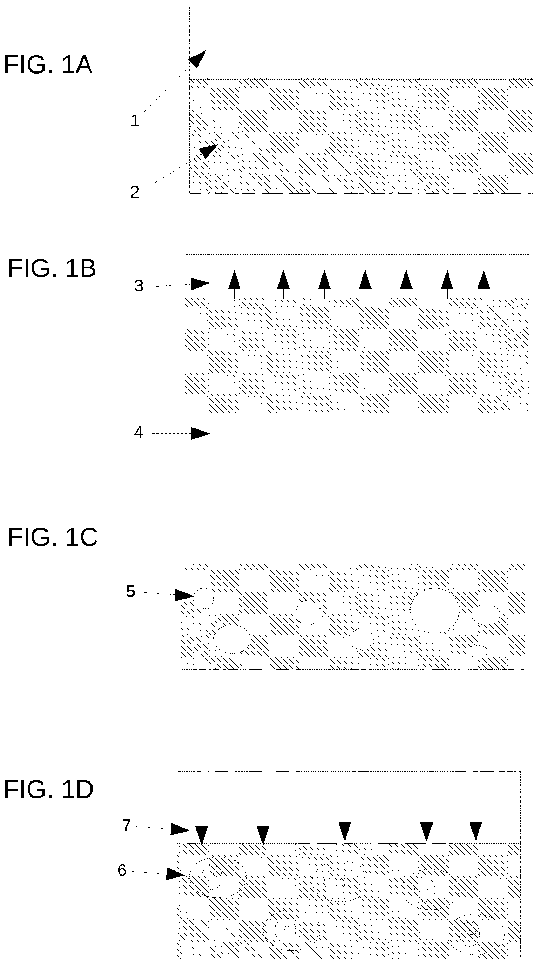

Figure 1 shows different steps of a vertical acceleration of a liquid, which is inside a vacuum container

Figure 1A shows a liquid (2). Above the liquid is a vacuum (1).

Figure 1B shows the liquid, which is accelerated in upwards direction (3). At the bottom oft he liquid is also a vacuum gap (4)

Figure 1C shows the liquid at a different point of the acceleration where cavitation bubbles are generated inside the liquid (5).

Figure 1D shows collapsing cavitation bubbles with shock waves (6) during the acceleration in downwards direction (7).

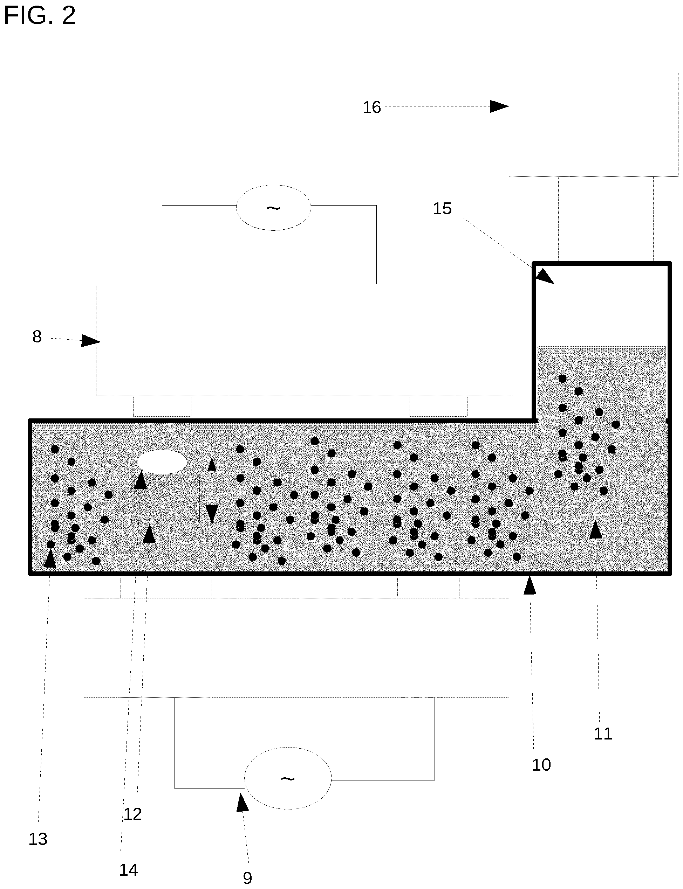

Figure 2 shows a vacuum pump (16) connected to a vacuum container (10) in which is a liquid (11). Inside the liquid (11) are particles (13) and objects (12). The vacuum container (10) is not complete filled with the liquid (11) there is also a vacuum (15).
At the top of the vacuum container (10) is an electric magnet (8) mounted also at the bottom of the container. The two electric magnets (8) are connected with two ac voltage and current power supplies (9).
At the object (12) cavitation bubbles (14) are.

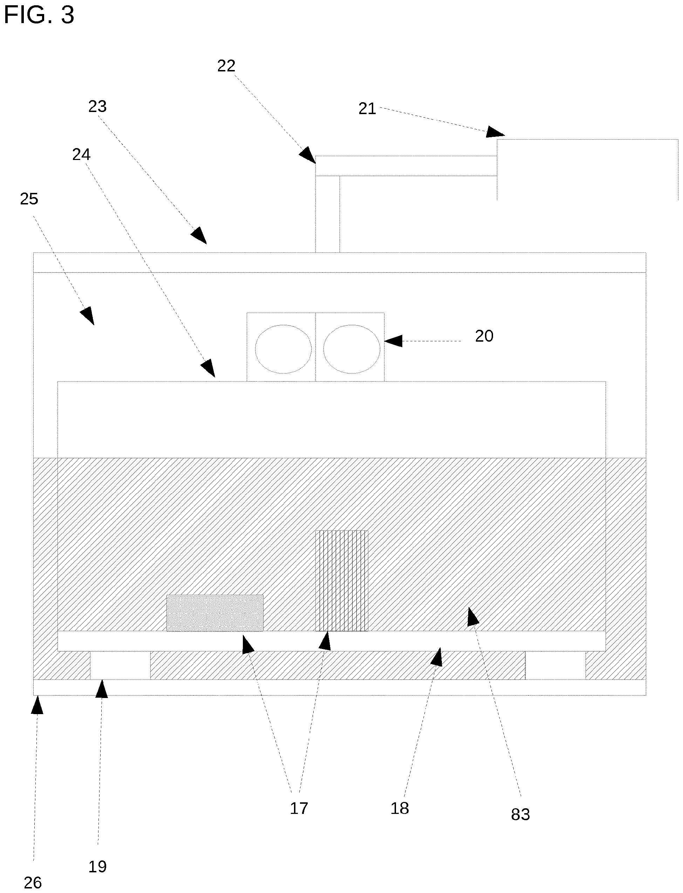

Figure 3 consists of a vacuum container (26), which is connected through a cover (23) and a vacuum connection (22) to a vacuum pump (21).

Inside the vacuum container (26) are a liquid (83) and a vacuum (25). At the bottom of the vacuum container (26) a sieve (18) is mounted via rubber buffers (18) tot he vacuum container (26). Two objects (17) are on the sieve (18). The sieve is connected to a mounting plate (24) which has two external electric vibrators (20). The objects are fortified to the sieve.

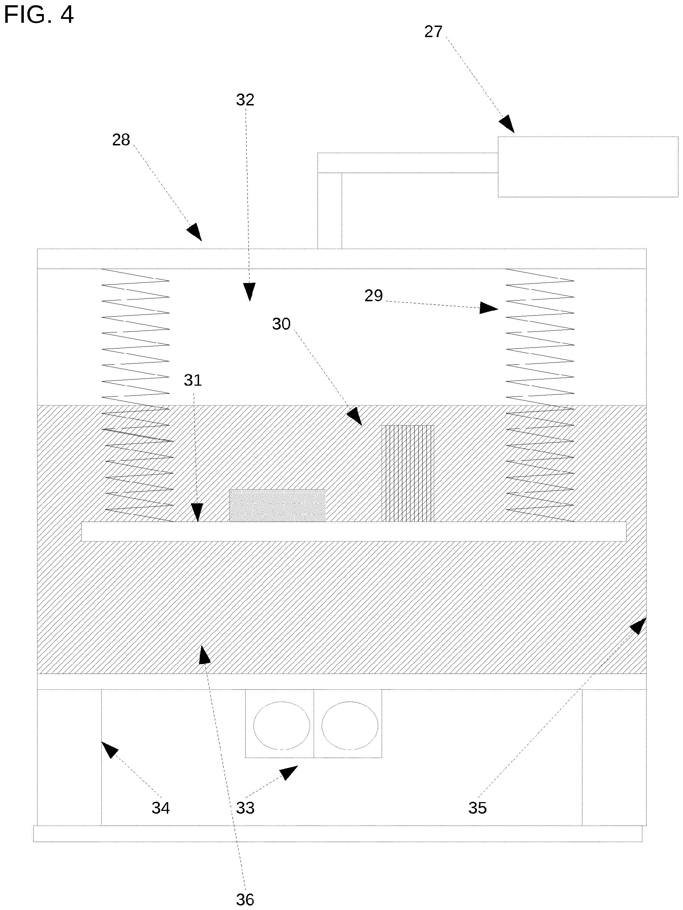

Figure 4 shows a vacuum pump with vacuum connection (27) connected to a cover (28), which is on a vacuum container (35). Inside this vacuum container (35) is sieve (31), which is connected to the cover (28) via spring (29). There are objects (30) on the sieve (31). The vacuum container (35) is partly filled with a liquid (36) and a vacuum (32). Two external electric vibrators (33) are mounted outside at the bottom of the vacuum container (35). Also dampers (34) are mounted outside at the bottom of the vacuum container (35).

Figure 5 shows a vacuum pump (45) connected via a vacuum connection (44) to a cover (42) of a vacuum container (38). Two electric vibrators (40) are connected via a mounting plate (41) and springs (43) to the cover (42). Three plates with holes (37) are connected to the mounting plate (41) and the electric vibrators (40). The Vacuum container is partly filled with a liquid (39).

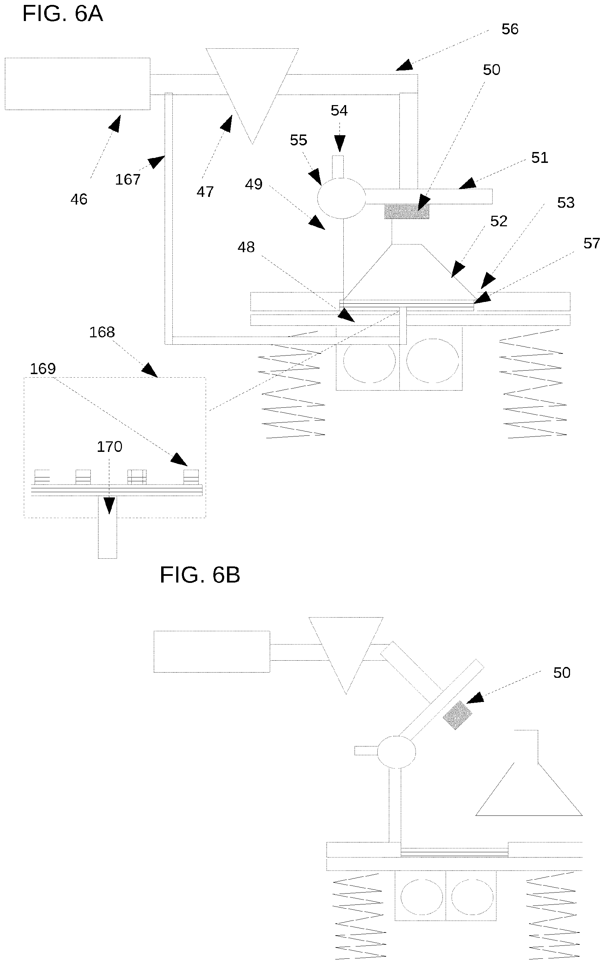

Figure 6A show a vacuum pump (46) connected in fluid communication with a separator (47), which is connected via vacuum connection (56) to a cover which is connected to a hinge (51). The height adjustable hinge (55) is connected to a rack (49) which is mounted to a mounting plate with hole (53). There is a lock for the cover (54) as part of the hinge (55) . A container with standardized dimensions(52) stands in a holes of a mounting plate with hole (53) . The mounting plate with hole (53) is mounted on a vibration table (48). The container with standardized dimensions (52) is connected via an adapter for containers with standardized connections (50) through the cover connect with hinge (55) to the vacuum connection (56). At the bottom of the container (52) is a rubber bumper with side restraints (57). The container (52) stands in the rubber bumper with side restraints (53). There is a vacuum connection (167) from the rubber bumper with side restraints (53) to the vacuum pump (46). A enlarged view of the Rubber bumper with side restraints (53) is at the left (168). It shows clearly that the there are side restraints (169) and a vacuum connection (170) in the middle of the bumper (57).

Figure 6B shows the opened machine.

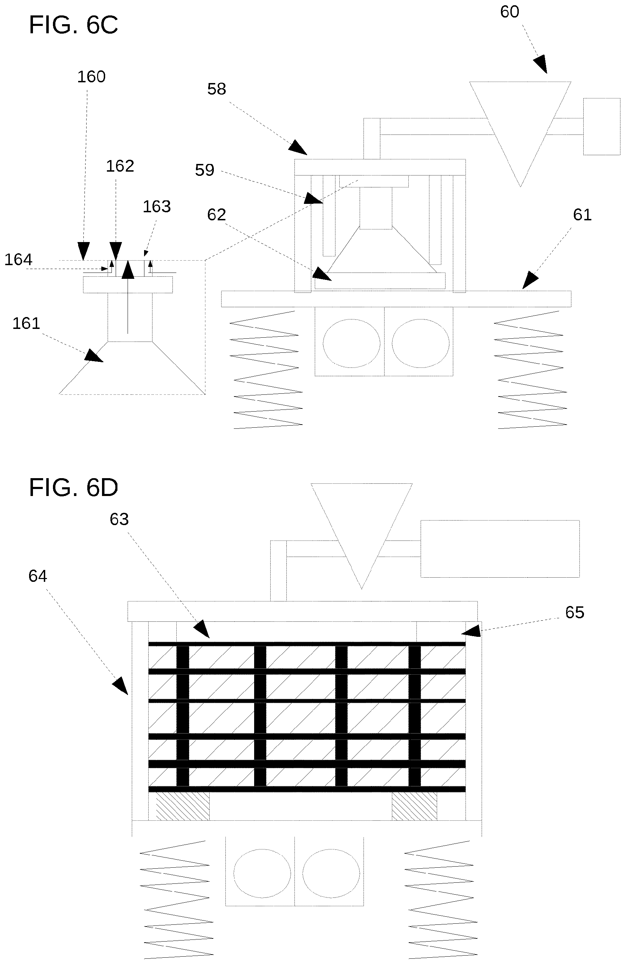

Figure 6C shows a vacuum container(58) with cover mounted on a vibration table (61) and the cover connected to a vacuum system with separator (60). Inside the vacuum container (58) are vibration protection adapter for standard dimensions (59) and (62) protecting a standard container. There is an enlarged view (160) of the vacuum adapter (162) and the standard container (161). There is an air flow (164) from the standard container (161) and from the left and right of the vacuum adapter(162).

Figure 6D shows a similar device as Figure 6C a vibration table with vacuum container and vacuum system (64) but larger and optimized for a IBC container (63) which is widely used in chemical industry. There are ibc adapters (65) constructed for generating a connection between the vacuum system (64) and the IBC container (63).

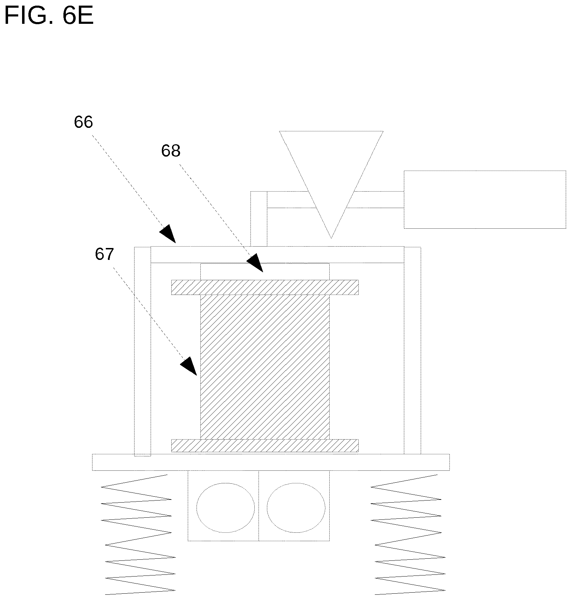

Figure 6E shows a barrel with standardized dimensions (67) which are connected via adapter for barrel with standardized dimensions (68) to a vibration table with vacuum container and vacuum system.

Figure 7A shows a vibration table with vacuum container and vacuum system (69) which has four plates with holes (70) mounted horizontally inside the container. The container is filled partly with a liquid (71).

Figure 7B shows a vibration table with vacuum container and vacuum system (72) which is partly filled with a liquid (73) and inside the liquid(73) are connected plates with holes (74). The plates are not connected to the container (72).

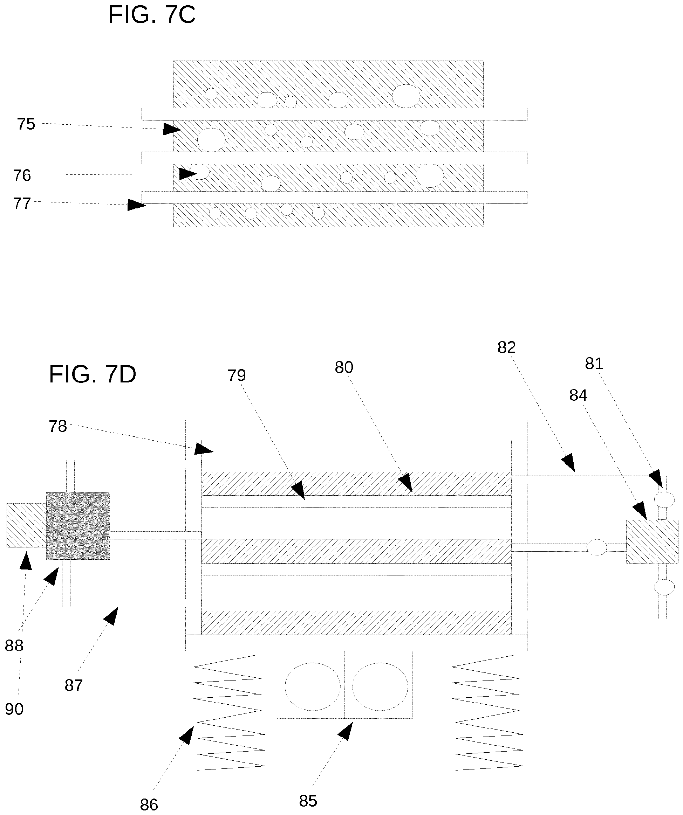

Figure 7C shows a liquid (75) in which cavitation bubbles (76) are generated at the plates with holes (77).

Figure 7D shows a vacuum container (89) connected with two electric vibrators (96) and standing on four springs (95). At the left side of the vacuum container (89) are three inputs of three tubes (82) each of them has a metering valve (81) which is connected to tube with filed with a liquid (84). Inside the vacuum container(89) are three plates (79) dividing the vacuum container (89) into three different parts. Each one part is partly filled with the liquid (80) and a vacuum (78). At the right side of the vacuum container (89) three tubes are connected . All three tubes (87) are connected at the end to a fluid pump (88) which is mounted on a tube with the liquid (90).
Figure 8A shows a vacuum pipe (100) mounted via two pipe mountings (92) on a vibration plate (97) which is connected with four springs (95) and two electric vibrators (96) . At the left end of the vacuum pipe (100) is a fluid pump (101) at the right end of the pipe is metering valve (94) with a control (98). Right from the valve (94) flows the liquid (99) into the vacuum pipe (100). The vacuum pipe (100) is not completely filled with the liquid (99) there is also a vacuum (93). At the top of the vacuum pipe (100) is vacuum system with separator and pump (91) connected in fluid communication with the vacuum pipe (100) .
Figure 8B shows the same device as figure 8A but without a vacuum system. The pipe is also not completely filled with the liquid.

Figure 8C shows the same device as figure 8B with at the left end of the vacuum pipe(100) a valve output which is higher than the valve input(102) at the right side of the vacuum pipe (100).

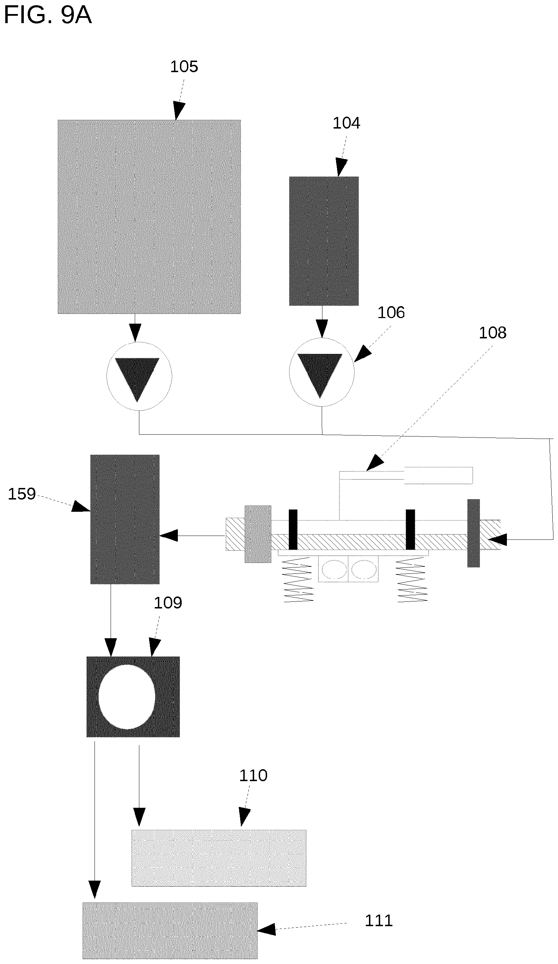

Figure 9A shows a biodiesel manufacturing process flow diagram. It starts with a tank filled with methanol and a catalyst (104) this tank is connected to a metering pump (106) which is connected in fluid communication to a device of figure 8A (108). Also another tank filled with vegetable oil (105) is connected to a metering pump (107) which is also connected in fluid communication to the device of figure 8A (108). The device of figure 8A (108) is on the left side connected in fluid communication with a reaction tank (159) which is in connection in fluid communication with a centrifugal separator(109) which separates the gylcerine (110) from the biodiesel (111).

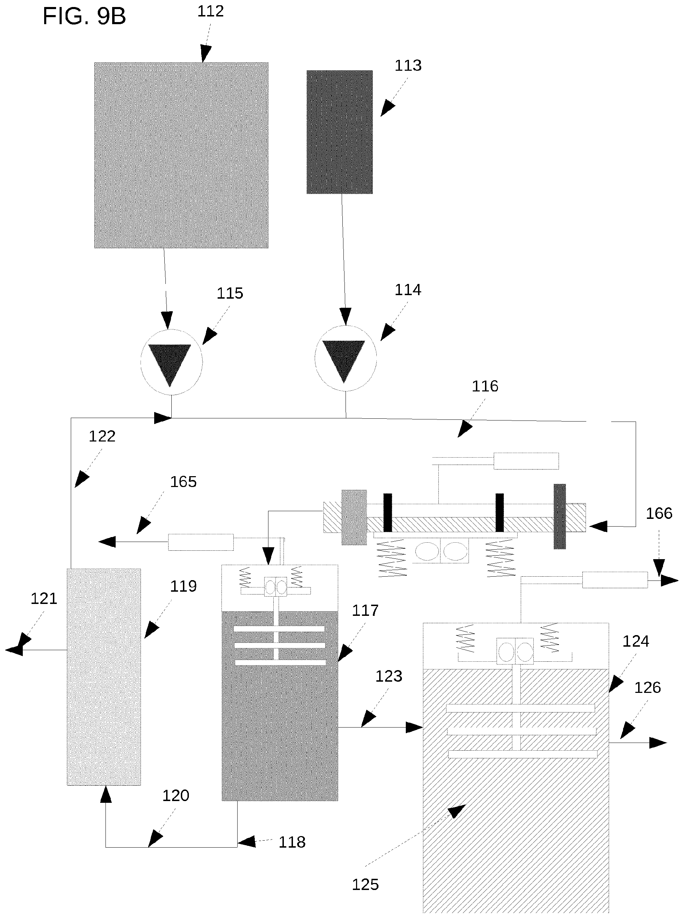

Figure 9B shows a tank with ethylene glycol with a catalyst (112) and a tank with terephalic acid (113). Both tanks are connected in fluid communication with two different metering pumps (115) and (114). The pumps are connected in fluid communication with a device of figure 8A (116). The left end of the device of figure 8A is connected in fluid communication with a esterification reactor (117). The esterification reactor (117) is a device of figure 5 and also connected to a device of figure 5 (124) in which the feed for the polycondezation reactor (123) flows. The device of figure 5 (124) is partly filled with a liquid (125). The outgoing result from the device of figure 5 (124) is the pet plastic (126). The other flow from the esterification reactor (117) are unused chemicals (118) which are the feed for the separation vessel (120). The separate vessel (119) has two outgoing flows one is waste and water (121) the second one is recovered feed (122). There are two flows from the two vacuum pump of the devices of figure 5 the first one is methanol (165) and the second one is ethylene glycol (166).

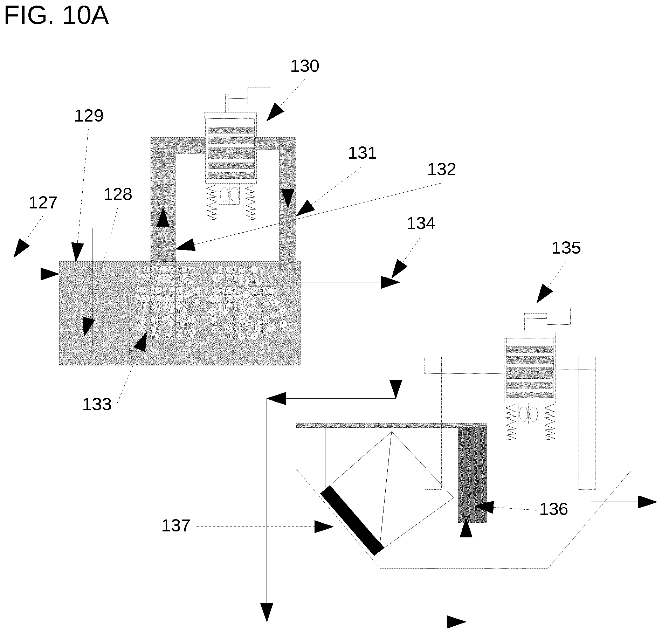

Figure 10A shows an aeroation tank (129). At the left end of the aeroartion tank (129) an inflow of wastewater (127) flows into the tank. A strirrer (128) in the the aeroartion tank is in the left part of the tank. In the rest of the aeroation tank (129) are bubbles of air (133). Because of the fact that the aeroation tank (129) is open a device of figure 7A (130) is mounted at the side and outside of the tank (129). Two pipes a longer one (132) and a smaller one (131) is connected in fluid communication with the tank and the device of figure 7A (130). The flow diagram shows an outgoing output from the aeroation tank (129) a sludge(134) which flows into a sludge disgestion (137) as feed sludge (136) . To the the sludge disgestion device (137) is also a device of figure 7A connected in fluid communication. The output at the left side of the sludge disgestion is the cleaned water a.

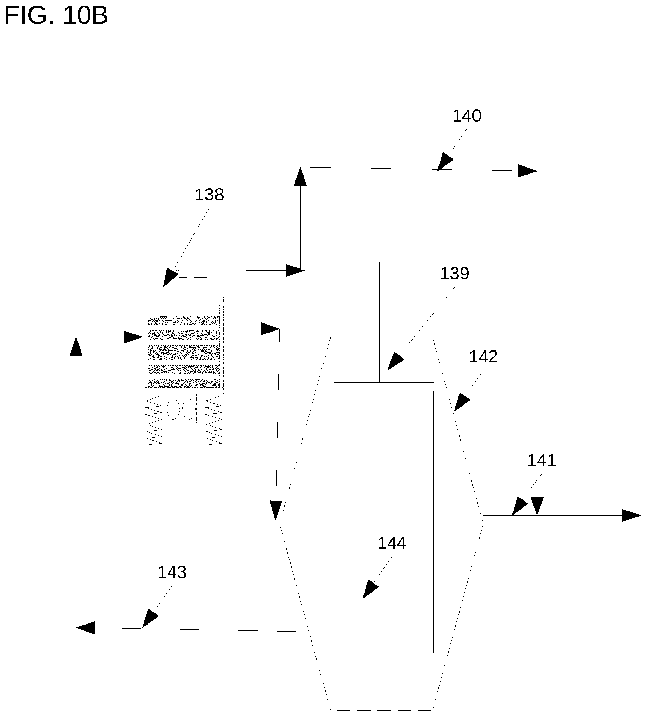

Figure 10B shows what happens to the sludge from the sludge disgestion device. As the central part of the drawing there is a fermentation vessel (142) in which is a stirrer(139) at the top of the vessel. The vessel (142) is filed with sludge (144). A device of figure 7A is at the left side connected in fluid communication with the fermentation vessel(142). There is a flow of sludge (143) from the vessel(142) to the device(138) and backwards. Also there is a flow from the left side of the vessel (142) and the device (138) of methane gas (140/ 141).

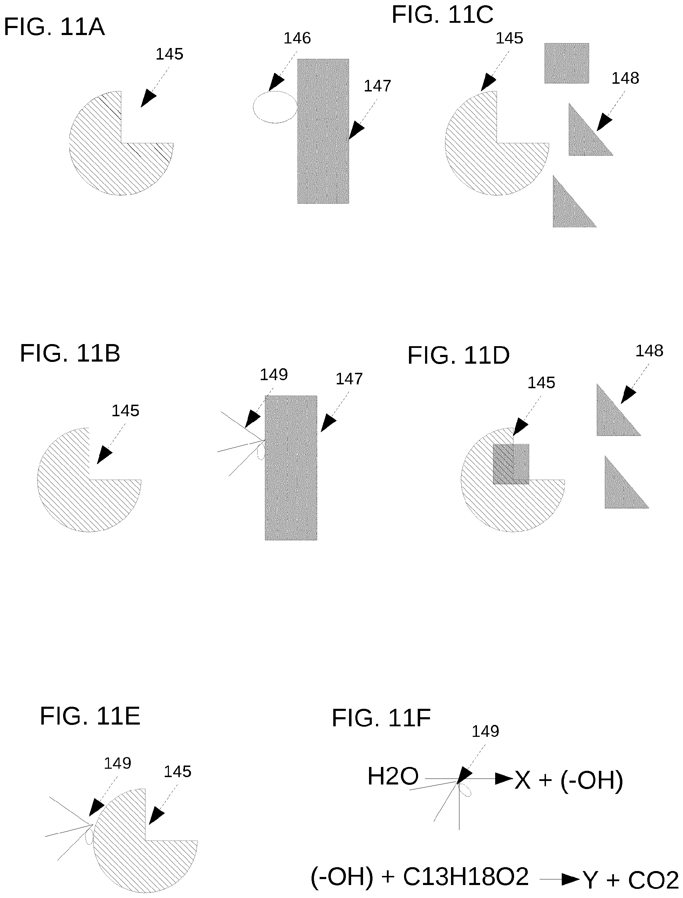

Figure 11A shows a microorganism (145) and a cavitation bubble (146) at some organic waste (147). It is the first scene in the process of cavitation increased biological reactions.

Figure 11B shows a microorganism (145) and a collapsing caviation bubble (149) collapsing at some organic waste (147). It' s the second scene as the cavitation bubble is collapsing.

Figure 11C shows a microorganism (147) and destroyed organic waste (148). It is the third scence.

Figure 11D shows a microorganism (145) eating the destroyed organic waste (148). It is the fourth scence and last scene.

Figure 11E shows a collapsings cavitation bubble (149) destroying a microorganism (145).

Figure 11F shows a chemical reaction schema where H2O is changed with a collapsing cavitation bubble (149).

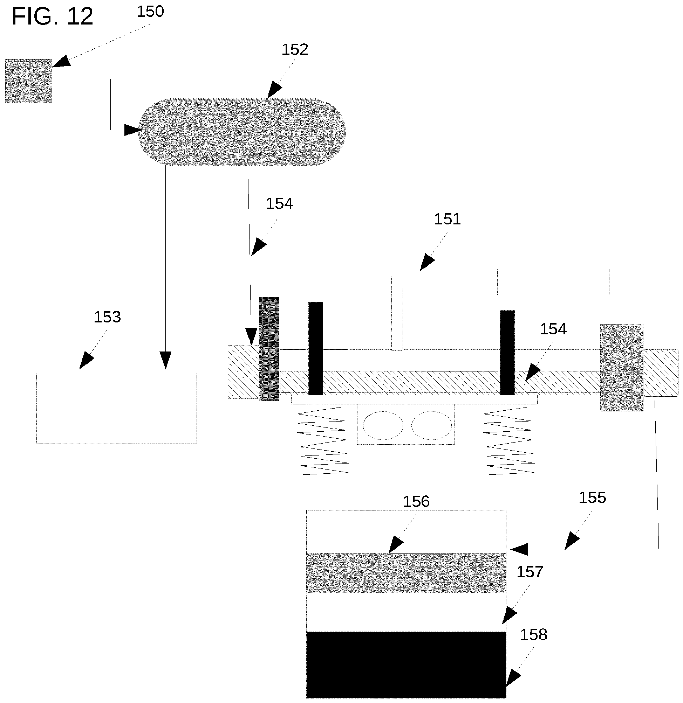

Figure 12 shows mined oil sand (150) which is put into a crusher (152). The crusher is connected in fluid communication to a device of figure 8A (151) inside the device (151) is a slurry from the crusher (154). On the right end of the device (151) the device is connected in fluid communication to a separation tank. Inside the separation tank is at the top oil (156) in the middle water(157) and at the bottom sand and dirt (158).

### Operation Figs. 1A to 1D

The Figs 1A to 1D show a liquid which is accelerated cyclically upwards and downwards during one complete cycle.
It explains the physical effect of widely used in this application. In a vacuum container a liquid (2) is accelerated upwards. Because there is a vacuum (1) the upwards direction (3)of the liquid generates at the bottom of the container also a vacuum gap(4). Large cavitation bubbles are formed (5) which are collapsing as the liquid moves downwards (7) generating strong shock waves (6). This effect can be widely used in chemical processes but it has to be created much more efficient.

### Operation Figure 2

In the device of figure 2 two electric magnets (1) are used for cavitation generation. If the upper magnet is turned on the other magnet is turned off and if the magnet at the bottom is turned on the upper is turned off. If a ac voltage(9) is now applied to the magnets the particles (13) and objects(12) are now alternated accelerated upwards and downwards. This effect generates cavitation bubbles (14) at the particles(13) and objects(15). If the vacuum pump is turned on (16) a vacuum (15) is generated in a part of the vacuum container (10) increasing greatly the effect.

### Operation Figure 3

If the vacuum pump (21) is turned on a vacuum (25) is created inside a vacuum container(26) which is partly filled with a liquid(83). The two external electric vibrators(20) are running in opposite direction generating a vertical oscillation of the sieve (18) and the objects (17). The oscillation generates also cavitation bubbles as described in Operation of Figure 2 which are cleaning the objects(17). The main advantage by this machine is that only the parts which have to be cleaned have to oscillate not the complete liquid.

### Operation Figure 4

The two external electric vibrators (33) are running in opposite direction generating a vertical oscillation of the vacuum container (35). The vacuum pump (27) generates a vacuum(32) inside the vacuum container(35). The vacuum container (35) is partly filled with a liquid(36) and vertical oscillating which generates cavitation inside the liquid (36). The springs (29) which are connected to the cover(28) of the vacuum container (35) are isolating the objects (30) from the vertical oscillation. They don't move or move much smaller than the surrounding liquid (30). The cavitation cleans the objects (30). The main advantages of this technical solution is than the objects are not strongly shaked and this process or this machine can also be used even without using a vacuum pump (27) but the effect is not so intensive as with using the vacuum pump (27).

### Operation Figure 5

The vacuum pump (45) creates inside a vacuum container (38) a vacuum . The vacuum container is partly filled with a liquid (39). The two electric vibrators (40) are running in opposite direction causing a vertical oscillation of the plates with holes (37). This generates also cavitation. The main advantage of this device is that the cavitation is generated directly inside the liquid.

### Operation Figure 6A

One of the most practical problems by using the in figure 1 described physical effect in laboratory use is that you have to build your own adapter or containers to use the effect effectively. The technical solution described in the figs 6A to 6E solves that problem.

A container with standardized connections (53) is put in rubber bumper with side restraints (57). This is done that the container (52) is not able to break out laterally if the vibration table (48) is turned on. A cover connected with a hinge (51) presss the container (52) against the mounting plate so that it doesn' t fly away. Because of the fact that the containers doesn't have the same height a rack (49) is used to adjust the height of the cover. The last problem is that all containers have different connections, well most of them are standardized so adapter for standardized connections is used (50). The vacuum pump (46) is turned on. It creates a vacuum inside the container (52) and also fortifies it because of the vacuum connection (170) in the bumper (57). As the vibration table (48) is turned on cavitation is generated inside the container (52). The bumper (57) and the adapter (50) prevents through the elastic behaver the container (52) from being destroyed. If the vibration table (48) is turned on liquids inside the container can reach the vacuum pump (46) and destroy it, so a separator (47) is mounted inside the vacuum connection (56).

### Operation Figure 6B

If the lock for the cover (54) is opened the container (52) can be easily changed.

### Operation Figure 6C

Not all laboratory containers are able to sustain a vacuum underpressure even if toxic or dangerous chemicals are used the destruction of a container could lead to serious damage. The technical solution of figure 6C solve this problem. A container is put inside vacuum container with a cover (58). Adapters for vibration protection (59/62) are put aside and below the container. This causes that the container is not destroyed while the vibration table is turned on. A vacuum pump (60) generates inside the container (58) a vacuum. The barrier (163) of the adapter (162) causes that not only the standard container (161) is evacuated but also the complete vacuum container (58). If the vibration table (61) is turned on it generates vertical oscillations and therefore cavitation inside the standard container (161).

### Operation Figure 6D to 6E

The operation of the device in figure 6D is very similar than the operation of the device in figure 6C. The only difference is that a widely used ibc container (63) is used instead of a standard container (161). The cavitation is also generated as the vacuum pump is turned on and the vibration table.
Figure 6E works the same way. A barrel with standardized dimensions (67) is used instead of an ibc container there.
The main advantages of these devices are that the most common barrels and ibcs are not robust enough to sustain the large pressure difference if a vacuum is generated inside them.

### Operation Figs 7A to 7C

In Figure 7A the vacuum pump is turned on creating a vacuum inside the vacuum container. The electric vibrators are turned on. This generates cavitation inside the liquid (71). Cavitation generation is greatly increased because of the fact that plates with holes (70) are inside the container. Figure 7C describes in detail the process. The holes in the plates(77) are used for fluid flow that the fluid is able to oscillate vertically. Cavitation is likely created at the plates because the plates multiplies the effect described in figure 1A to 1D. In Figure7B the plates (74) are not mounted to the container (72). They are connected to each other and put together inside the liquid (73). If a vacuum is created inside the container and the vibration table is turned on cavitation is generated.

### Operation Figure 7D

The plates (79) divides the container (89) into three independent containers. A fluid pump (88) is turned on. If the three metering valves (81) are justified as that the flow into the pump is greater than the flow from the tube with the liquid (84) into the three containers a vacuum (78) is generated inside the containers. This is the fact because the left outputs are higher than the right inputs. If the two electric vibrators (85) are turned on and running in opposite directions cavitation is generated inside the containers.

In one sentence this figure describes how to build more vibration table based cavitation machines with only one vibration table.

### Operation Figure 8A to 8C

Because of the fact that the amount of cavitation generated increase as the bottom surface area increases. It is easily to understand that the use of a pipe can bring significant advantages.

The vacuum pump is turned on generates a vacuum (93) inside the pipe (100). The separator protects the vacuum pump from being destroyed by the liquid. The fluid pump (101) pumps the liquid to the right and the metering valve (94) controls the inflow so that the correct height of the liquid inside the vacuum pipe (100) is secured.

8B is similar as 8A but the vacuum system (91) is removed. The operation is same but the height of the liquid is regulated here by the pump power and the metering valve. The fluid pump here creates the vacuum (93).

In Figure 8C a flowing liquid in a vacuum pipe (100) is shown . The fact that the valve input and output are at different heights cause the generation of a vacuum above the upper valve output (103). The height in this example is regulated by the different heights of the valve input and outputs.

In all three above mentioned examples the electric vibrators are running in opposite direction creating vertical oscillations which generates cavitation.

### Operation Figure 9A.

Cavitation can greatly increase chemical output in chemical processes. It is widely known that ultrasonic cavitation increases the productivity of biodiesel processes.

The biodiesel process described in Figure 9A is very simple. The vegetable oil (105) in a tank is mixed with methanol and a catalyst by a device of figure 8A. The cavitation generates a very stable emulsion. This emulsion is then stored into a reaction tank (159). There the gylcerine and the biodiesel separate. The final separation is done by a centrifugal separator (159) which separates the biodiesel from the gylcerine. Because of the fact the the device of figure 8A creates a very stable emulsion with very small droplets the reaction temperature can be reduced from 50° Celsius to 20° without any loss in chemical reaction time and output of the process. The next advantage is that less catalyst is used because of the fact that the tiny droplets in the emulsion increase the surface area of the chemical reaction partners.

### Operation Figure 9B

The biodiesel produced by the diagram in Figure 9A is produced by transesterfication. So it lays on the hand that also other transesterfication processes can increased with cavitation. Figure 9B shows a process which produces polyester plastic by transesterfication. Ethylence glycol with a catalyst (112) is pumped by a metering pump (115) to the device of figure 7A (116) also terephthalic acid (113) is pumped by a metering pump (114) to the device of figure 7A (116). The two pumps secure that all components are in the right ratio. The cavitation created by the device of figure 7A (116) creates a stable slurry with very tiny droplets and therefore a large surface area. The slurry is pumped into a esterification reactor (117) where it reacts at a temepratur of 150°C. The esterfication reactor (117) is a device of figure 5 which is running and generates cavitation. There are three main flows from the esterification reactor (117) the first one are unused chemicals (118) which are pumped into a separation vessel (119) which separates the waste and water (121) and the recovered feed (122) which is pump back to the process. The second flow is methanol (165) which is generated through the process and distilled. The cavitation enhances the distillation process additional information can be found in "EFFECTS OF ULTRASONIC WAVES ON ENHANCEMENT OF RELATIVE VOLATILITIES IN METHANOL-WATER MIXTURES" from Adnan Ripin.
The third flow is the feed for the polycondensation reactor (123) which is pumped into a device of figure 5(124). The vacuum pumps are turned on which generates a vacuum inside the devices. The electric vibrators are generating cavitation. This increases the reactivity of the polymerization reaction in this case a polycondensation reaction. The output flow from the device of figure 5A (124) is polyester plastic (126). There is also an output of Ethylence glycol (166) which is generated through the chemical process and distilled. The distillation is also enhanced by cavitation.

### Operation Figure 10A to 11F

Ultrasonic cavitation is widely used in wastewater treatment. The Figures 11 A to 11 F show the chemical, physical effects of cavitation in wastewater treatment. A cavitation bubble (146) is formed at some organic waste (147). The bubbles collapses and destroys the organic waste (148). So the microorganisms can easily process the waste.
Cavitation can also be used to destroy the microorganisms itself therefore intensive cavitation is used this is shown in Figure 11E. Even can cavitation be used to destroy chemicals in water.
A large cavitation bubble collapses (147) and splits H2O into a radical -OH molecule and a Rest X the radial -OH molecule can react with other molecules in the case of Figure 11F Ibuprofen which is split into CO2 and a not dangerous rest y.
Literature can be widely found in the web by a google search "cavitation destruction drugs".
Figure 10 A shows the application of the in figure 7A described machine in a wastewater treatment plant. It is very easy how it works. The wastewater(127) come into a aeration tank (129) where a stirrer (128) mixes it with the tank water. In the aeration tank (129) air bubbles are generated (133) for the biological treatment. A device of figure 7A (130) is running at the side of tank. The water from the below is pumped into the device of figure 7A through a long pipe (132) and pumped back at the top of the tank through a smaller pipe (131). The device of figure 7A (130) is turned on and generates cavitation.
In a sludge digestion device (137) another device of figure 7A(135) is used. But there for generation of intensive cavitation to destroy the microorganisms and chemicals still in the water.
The sludge created in the wastewater treatment plant is a useful energy source. Therefore the sludge is pumped into a fermentation vessel (142) and fermented to produce methane. Because of the fact that cavitation can increase fermentation output in fermentation reactions. Information therefore can be found widely in the web.
It is interesting for a owner of treatment plant to apply cavitation on a sludge.
Figure 10B shows a device of figure 7A which is connected at the side of a fermentation vessel (142). This means that to all fermentation vessels (142) can later a cavitation generation device of figure 7A be added. The sludge in the fermentation vessel (144) is pumped through a device of figure 7A which generates cavitation. Because of the fact that a device of figure 7A uses in operation a vacuum pump the methane (140) which is wanted is pumped to other methane (141) created by the fermentation vessel.

### Operation Figure 12

The mined oil sand(150) is put into a crusher(152) where it is mixed with hot water. This creates a slurry (154) this slurry is pumped into a device of figure 7A (151) which is running. This creates cavitation inside the slurry. The cavitated slurry is pumped into a separation tank where the oil (156) the water (157) and the sand and dirt (158) separates .
The non - usable material by the Crusher is separated directly at the crusher (152).
The normal oil sands extraction process pumps the slurry from the crusher without applying it to cavitation and agitating the slurry very intensive in large washing drums to separate the oil from the sand. Our experiments show that we can achieve great separation even with cold water.

### Conclusion, Ramification and Scope

Accordingly the reader will see that this invention is of great value for the chemical industry.

The first process description in this application is a chemical process comprising that chemical reactions are activated, accelerated or enhanced by oscillating particles or objects vertically with electric magnets inside a liquid that cavitation is generated. This process can be done in a vacuum container which is partly filled with the liquid and a vacuum. The vacuum increases greatly the cavitation generation effect. This process can be used in a lot of chemical processes because of the effect that if generates cavitation very effectively. It is only limited that in very very viscous liquids cavitation cannot be created very effectively. But even is this media this process can be used for mixing applications.

Further is a mechanical device disclosed in this application (figure 3) which can used for cleaning applications characterized by the fact that inside a vacuum container partly filled with a liquid is a device which is able to oscillate objects inside the liquid vertically that cavitation is generated at the objects.

This device is similar to the device of figure 5 which generates cavitation inside a liquid through vertical oscillations of three plates with holes in a vacuum container partly filled with a liquid and a vacuum. All these above mentioned processes and devices can be summarized.

Cavitation is generated by objects (plates with holes, particles or sieves) inside a liquid through vertical oscillations of these objects. This physical effect can greatly increased if the liquid is inside a vacuum container, pipe or tube who are partly filed with the liquid and a vacuum. It is very easy to see that this effect can also be used for cleaning applications and it is very easy to see, that this effect can be used is a continuous process which is shown in the flow diagram of the polyester process.

For sensitive objects the cleaning device described in US 8,147,618 B2 is not suitable to a device is shown (figure 4) which uses springs for vibration isolation of the objects. It is clear that not only springs can be used for vibration isolation also dampers or buffer can be used.

Figure 6A shows an apparatus comprising: a vacuum pump with a separator in fluid communication with a removable container; an adapter to connect the removable container to the vacuum pump connection; a height adjustable cover to fortify the removable container to a vibration table which is capable of generating vertical oscillations of the removable container.

Figure 6C shows an apparatus which is able to generate cavitation inside a removable container which is inside a vacuum container and protected by vibration protection adapters so that the container is not destroyed. Figures 6D and 6E show an ibc container and a barrel inside such a device. The concept of the IBC was patented by inventor Olivier J. L. D'Hollander working for Dow Coming S.A.
It is clear that this apparatus is not limited only to barrels and ibcs and containers if someone has customizable adapters for example adapters that may be made larger or smaller in the operation similar to clamps or adjustable screws nearly all types of containers can be used in such apparatus if they are built large enough.

The apparatus in figure 7A can easily described it is a vacuum container with plates with holes for fluid flow connected in fluid communication to a vacuum pump with separator and a vibration table which is capable of generating vertical oscillations of the container.
The main advantage is that this device increases greatly the surface area of the cavitation generation effect. Figure 7B shows that is not necessary to mount the plates directly to the container they can also be added later. To summarize the both machines it is a cavitation genration apparatus which uses plates with holes for increasing the cavitation. This effect is not only limited to plates it is also possible to use hemispheres, quarter spheres and other objects allowing the vertical oscillation of the liquid and increasing the surface area of the physical effect described in figure 1.

Figure 7C shows a device which is similar to device described in US 8,147,618 B2 for chemical reactions. But it allows with the help of a pump system and metering vales to built more of such devices with one vibration table. This approach can be adopted for use with nearly all in this application described machines. If someone combines the in the figures 8A to 8C described machines with this approach he can built maybe spiral tube on a vibration table for cavitation generation.
Figure 8A - 8C are just cavitation pipes with different technical characteristics.
Figure 9A describes a biodiesel generation process it is very easy to see that the transesterfication process which is widely in the chemical industry used is not only limited to biodiesel production.
Figure 9B shows that the cavitation created with the effect described in figure 1 can used for four different technical processes.
The first on is the distillation process which is enhanced by cavitation generated through vertical oscillation of the liquid or parts of the liquid. Because of the fact that distillation is very widely used in chemcial industry it is very very clear that this process is not only limited to the production of plastic. It can be also used in every distillation process. Even without the use of a vacuum pump. You can use a device of figure 2 to generate powerful caviation and have effective distillation.

The second process is the process of polycondensation. This is a polymerization reaction which is the third process. And as fourth process the process of transesterfication.
The figures 10A to 11F show that the method comprising generating cavitation in a liquid through vertical oscillations of the liquid can be used for fermentation, wastewater cleaning processes. It depends on the intensity of the cavitation which process is increased or done.
The described fermentation process can easily adopted to other chemical industries such as pharmaceutical industry and ethanol production or other biological processes.
Every chemical process done by microorganisms can easily increased.
Figure 12 shows the very simply process of oil sands extraction. It is easy to see that the pipe cavitation reactor can also be used to clean dirty sands, rocks or other things in a continuous process. Also it is very easy to see that in a lot of the pipes in the chemical plants can be used as cavitation reactors if modified.

## Claims

1. Apparatus for hydrodynamic cavitation generation, comprising
- a vacuum pipe (100) mounted on a vibration plate (97), the vibration plate (97) connected to four springs (95) and to two electric vibrators (96) for generating vertical oscillations of the vacuum pipe (100),
- a valve input at the right end of the vacuum pipe for feeding a liquid into the vacuum pipe (100),
- a valve output at the left end of the vacuum pipe for conducting the liquid out of the vacuum pipe (100),
- a metering valve (94) with a control (98) at the right end of the vacuum pipe for controlling the amount of liquid introduced into the vacuum pipe (100), and
- a fluid pump (101) at the left end of the vacuum pipe for pumping the liquid.

2. Apparatus according to claim 1,
**characterized in that** the valve output (103) is located at a bigger height of the vacuum pipe (100) than the valve input (102) .

3. Apparatus according to one of the claims 1 or 2,
**characterized in that** the apparatus further comprises a vacuum pump (91) for generating a vacuum inside the vacuum pipe (100).

## Patentansprüche

1. Vorrichtung zum Erzeugen einer hydrodynamischen Kavitation, umfassend
- ein Vakuumrohr (100), welche auf einer Vibrationsplatte (97) montiert ist, wobei die Vibrationsplatte (97) mit vier Federn (95) und mit zwei elektrischen Vibratoren (96) verbunden ist, um vertikale Schwingungen des Vakuumrohrs (100) zu erzeugen,
- einen Ventileingang (102) zum Zuführen einer Flüssigkeit in das Vakuumrohr (100),
- einen Ventilausgang (103) zum Abführen der Flüssigkeit aus dem Vakuumrohr (100),
- ein Dosierventil (94) mit einer am Ventileingang (102) angebrachten Steuerung (98) zur Steuerung der in die Vakuumrohr (100) eingeführten Flüssigkeitsmenge, und
- eine am Ventilausgang (103) montierte Flüssigkeitspumpe (101) zum Pumpen der Flüssigkeit.

2. Vorrichtung nach Anspruch 1,
**dadurch gekennzeichnet, dass** sich der Ventilausgang (103) auf einer größeren Höhe des Vakuumrohrs (100) befindet als der Ventileingang (102).

3. Vorrichtung nach einem der Ansprüche 1 oder 2,
**dadurch gekennzeichnet, dass** die Vorrichtung ferner eine Vakuumpumpe (91) zur Erzeugung eines Vakuums innerhalb des Vakuumrohr (100) umfasst.

## Revendications

1. Dispositif de génération de cavitation hydrodynamique, comprenant
- un tuyau à vide (100) monté sur une plaque vibrante (97), la plaque vibrante (97) étant reliée à quatre ressorts (95) et à deux vibreurs électriques (96) destinés à générer des oscillations verticales du tuyau à vide (100),
- une entrée de soupape (102) destinée à alimenter le tuyau à vide (100) avec un liquide,
- une sortie de soupape (103) destinée à amener le liquide hors du tuyau à vide (100),
- une soupape de dosage (94) avec une commande (98) montée sur l'entrée de soupape (102) afin de contrôler la quantité de liquide introduite dans le tuyau à vide (100), et
- une pompe à liquide (101) montée sur la sortie de soupape (103) afin de pomper le liquide.

2. Dispositif selon la revendication 1,
**caractérisé en ce que** la sortie de soupape (103) se situe à une hauteur plus élevée du tuyau à vide (100) que l'entrée de soupape (102).

3. Dispositif selon l'une des revendications 1 ou 2,
**caractérisé en ce que** le dispositif comprend en outre une pompe à vide (91) destinée à générer un vide à l'intérieur du tuyau à vide (100).
